# EUROPEAN PATENT SPECIFICATION

(11) **EP 0 653 956 B1**
(45) Date of publication and mention of the grant of the patent: **24.04.1996**
(21) Application number: 93918670.6
(22) Date of filing: 05.08.1993
(51) Int. Cl.: B01D 53/66, B01J 35/04

(54) **CATALYTIC OZONE CONVERTER**
KATALYTISCHER OZON KONVERTER
CONVERTISSEUR CATALYTIQUE D'OZONE

(30) Priority: 07.08.1992 US 926798
(43) Date of publication of application: 24.05.1995
(73) Proprietor: AlliedSignal Inc., Morristown, New Jersey 07962-2245 (US)
(72) Inventor: DEVIN, Sean, Michael, Redondo Beach, CA 90278 (US); RUDER, Joseph, M., Beverly Hills, CA 90212 (US)
(74) Representative: Poidatz, Emmanuel
(86) International application number: US9307387
(87) International publication number: WO9403265

(56) References cited:
- EP-A- 0 152 560
- EP-A- 0 186 477
- EP-A- 0 298 943
- EP-A- 0 388 094
- DE-A- 1 419 682

## Description

### BACKGROUND OF THE INVENTION

This invention relates generally to improvements in catalytic converters, particularly of the type used in combination with an aircraft cabin environmental control system to reduce or eliminate ozone in conditioned air supplied to an aircraft cabin space.

Environmental control systems for aircraft are generally known in the art for supplying pressurized and conditioned air to an aircraft cabin space. In such systems, a bleed air flow obtained from an engine compressor stage is often used as a source of fresh air for supply to the aircraft cabin space at a selected temperature, pressure, and relative humidity. In some cases, the engine bleed air is supplemented by a flow of fresh outside air. Environmental control systems of this type are provided to enhance the comfort of flight crew and passengers within the aircraft, especially in the course of relatively high altitude flight operations.

Modern jet aircraft are typically designed for fuel-efficient operation at relatively high altitudes on the order of 25,000 feet or more above sea level. At such altitudes, the ozone content in ambient air is relatively high. As a result, the air flow stream supplied to the aircraft environmental control system exhibits a substantial ozone content. Ozone is widely recognized as an air pollutant, and can cause lung and eye irritation, headaches, fatigue and/or breathing discomfort in humans.

Catalytic converter devices have been used in aircraft applications to reduce or eliminate undesirable ozone in an air flow stream supplied to the aircraft cabin space by converting the ozone to oxygen. Such converters typically include a catalyst bed exposed to the air flow stream for purposes of decomposing ozone to oxygen. Such converters have unfortunately been relatively large in terms of size and weight in order to achieve the requisite mass transfer between the gaseous air flow stream and the solid catalyst.

The present invention relates to an improved catalytic ozone converter of compact size and lightweight construction, while providing highly efficient ozone decomposition with relatively minimal converter pressure drop.

### DISCLOSURE OF THE INVENTION

In accordance with the invention, an improved catalytic converter is provided for reducing the ozone content of an air flow stream supplied to an aircraft cabin space for purposes of cabin pressurization and/or air-conditioning. The catalytic converter comprises one or more plate-fin elements coated with a selected catalyst and retained within a housing preferably in a generally cylindrical configuration. The plate-fin element or elements define a large plurality of fins arranged in an axial succession of offset or staggered fin rows to obtain relatively high mass transfer between the air flow stream and the catalyst for purposes of ozone decomposition, with reduced or minimal pressure drop.

In the preferred form of the invention, a plurality of plate-fin elements of lightweight metal substrate material such as aluminum are formed as by stamping to define the axial succession of fin rows. Each fin row includes a regular pattern of corrugated fins, preferably having a generally rectangular profile, with the fins of each row being laterally offset or staggered relative to the fins of each adjacent row. The plate-fin elements are wrapped in a relatively tight cylindrical configuration, with a preferred form including a plurality of generally concentric plate-fin rings. The resultant cylindrical plate-fin core is mounted as by brazing within the converter housing with each fin row having a generally annular configuration. Alternately, a single plate-fin element in a spiral wrap configuration may be used to define the converter core for installation into the housing. In either case, the core provides the substrate for subsequent application of the catalyst coating to the plate-fin structure, such as by application of a catalyst-containing wash coat.

The air flow stream obtained, for example, as a bleed air flow from an engine compressor stage, is passed through the converter housing for intimate mass transfer with the catalyst coating on the plate-fin elements. In this regard, the offset fin rows provide for rapid transport of ozone molecules from the air flow stream to the catalyst surface with minimal disturbance of the air flow. This results in a relatively high mass transfer rate of ozone to the catalyst and a relatively low pressure drop in air flow stream. At the catalyst surface, the ozone rapidly decomposess to oxygen.

Other features and advantages of the present invention will become more apparent from the following detailed description, taken in conjunction with the accompanying drawings, which illustrate, by way of example, the principals of the invention.

### BRIEF DESCRIPTION OF THE DRAWINGS

The accompanying drawings illustrate the invention. In such drawings:
FIGURE 1 is a schematic diagram illustrating use of a catalytic ozone converter of the present invention for reducing the ozone content in an air flow stream supplied to an aircraft cabin space;
FIGURE 2 is an enlarged fragmented exploded perspective view illustrating one preferred form of the catalytic ozone converter embodying the novel features of the invention;
FIGURE 3 is an enlarged fragmented perspective view illustrating a plate-fin element having a succession of offset fin rows for use in the catalytic converter of the present invention;
FIGURE 4 is an enlarged fragmented sectional view illustrating a portion of the catalytic converter, depicting a plurality of plate-fin elements corresponding generally with FIG. 3 wrapped in concentric cylindrical array; and
FIGURE 5 is an enlarged fragmented perspective view illustrating an alternative preferred form of the invention, with a single plate fin element wrapped in a spiral array.

### BEST MODE FOR CARRYING OUT THE INVENTION

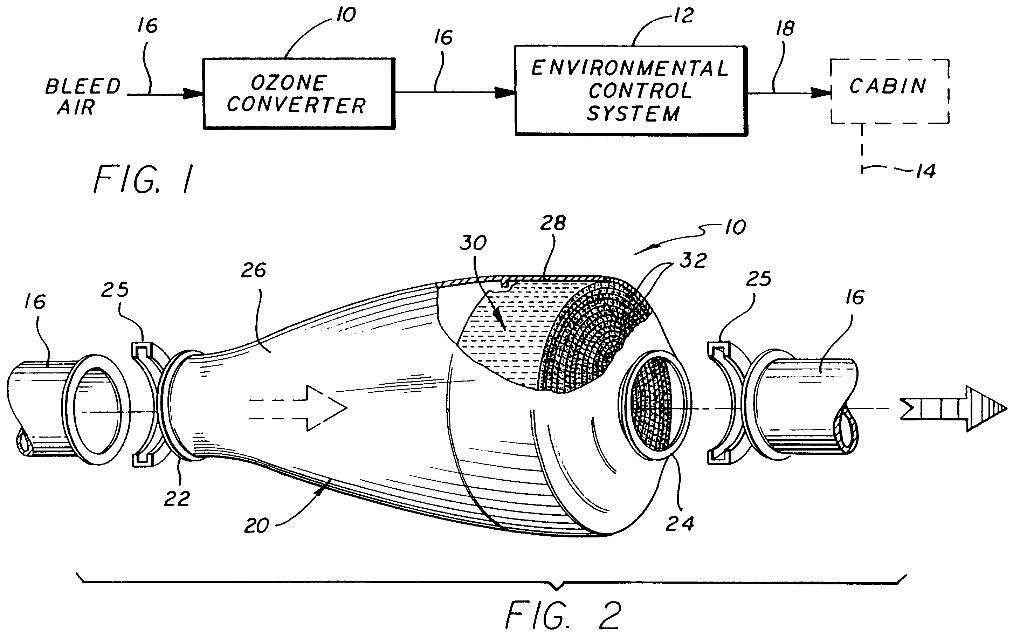

As shown in the exemplary drawings, an improved catalytic ozone converter referred to generally by the reference numeral 10 is provided for use in combination with an environmental control system 12 (FIGURE 1) for pressurization and/or conditioning of air supplied to an aircraft cabin space 14. The catalytic converter 10 comprises a relatively lightweight and compact converter device for reducing the ozone content of an air flow stream supplied to the environmental control system 12 for cabin pressurization and/or conditioning purposes.

As shown generally in FIGURE 1, the catalytic ozone converter 10 of the present invention is mounted in-line along an air flow conduit or duct 16 through which an air flow stream passes to the aircraft environmental control system 12. FIG. 1 illustrates the air flow stream in the form of bleed air obtained typically from a compressor stage of a gas turbine aircraft engine (not shown), although use of compressed ram air and/or a combination of engine bleed and ram air are known in the art. The environmental control system typically comprises an air cycle machine such as a turbocompressor in combination with appropriate heat exchanger and water extraction devices and the like to provide a conditioned and suitably pressurized flow through a distribution conduit 18 to the aircraft cabin space 14.

The catalytic ozone converter 10 is provided to reduce the ozone content in the air flow stream used for environmental cabin space control, wherein the natural ozone content present in the bleed and/or ambient ram air often exceeds acceptable limits especially in the course of relatively high altitude flight operations.

As shown in FIG. 2 the catalytic converter 10 comprises a housing 20 of generally circular cross sectional shape having inlet and outlet flanges 22 and 24 adapted for in-line connection by means of circumferential clamps 25 along the length of the air flow conduit 16 at a location upstream from the environmental control system 12. A preferred construction for the housing 20 includes a diametrically expanding inflow segment 26 for converting air flow stream velocity to increased pressure head. The expanding inflow segment 26 merges smoothly with a cylindrical segment 28 within which a converter core 30 is mounted, as will be described in more detail. The cylindrical segment 28 of the housing 20 merges in turn with a tapered outflow segment of rapidly reducing diametric size for reconverting pressure head to velocity.

The converter core 30 comprises a plurality of plate-fin elements 32 mounted within the cylindrical segment 28 of the housing 20 to define a multitude of small flow paths. The plate-fin elements 32 are arranged in a tightly packed cylindrical configuration, as a plurality of generally concentric annular rings. In this regard, the center of the cylindrical space defined by the housing 20 may be occupied by a small diameter support tube 34 having a short plate-fin element strip 32' received therein, or the support tube may be capped.

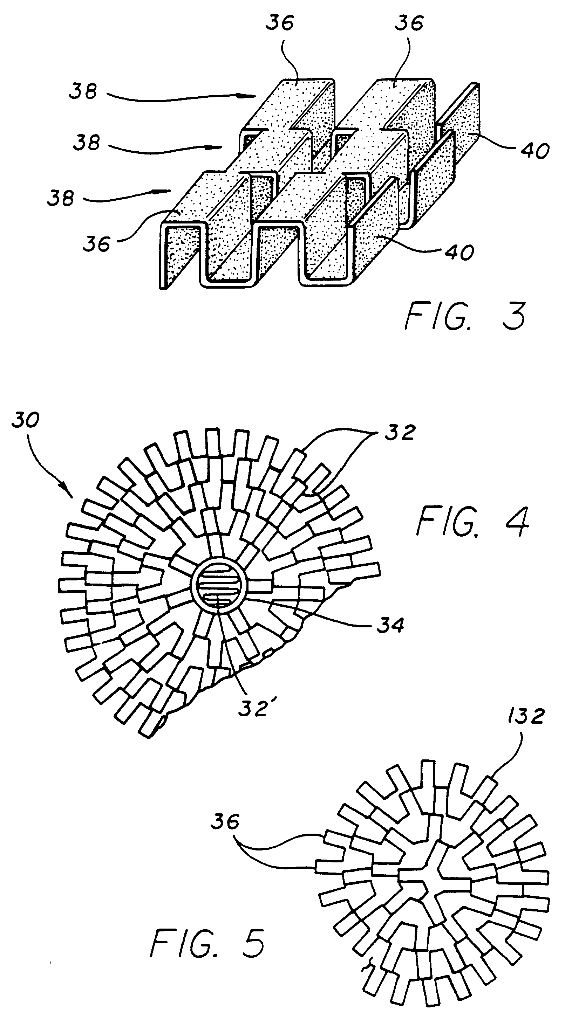

Each plate-fin element 32 is constructed from a relatively lightweight metal substrate material such as aluminum which can be shaped as by stamping to define raised fins 36. As shown in FIG. 3, the fins 36 are arranged in an axial succession of adjacent rows 38, with the-fins 36 preferably having a corrugated configuration of generally rectangular profile. Importantly, the fins 36 of each row 38 are laterally staggered or offset relative to the fins 36 at the adjacent leading and trailing sides thereof. Each plate fin element 32 carries a coating 40 of a selected catalyst material of a type known in the art for ozone decomposition, such as a catalyst including platinum and a base metal. Such catalyst materials are referenced, for example, in U.S. Patents 4,405,507; 4,206,083; and 4,173,549.

The plate fin elements 32 are arranged in the cylindrical configuration in generally concentric rows, as previously described, for installation within the cylindrical segment 28 of the converter housing 20. In one preferred configuration, the cylindrical housing segment 28 has a diametric size on the order of eleven inches, and each plate-fin element 32 is formed to define a fin height of about 0.25 inch, in combination with a fin row pattern of approximately ten rows 38 per inch axial length. With this construction, a converter core 30 defined by a snugly packed array of concentric plate-fin elements 32 having an axial length of about three inches has been shown to provide highly efficient ozone decomposition in an aircraft environmental control system application. However, it will be understood that alternate configurations may be used, such as alternate plate-fin element profiles of triangular, waved or slotted shape, mounted within a core housing which can be cylindrical, rectangular, or other suitable shape.

As shown in FIGS. 3 and 4, the cylindrically packed plate-fin elements arranges the fin rows 38 in an annular shape, with the fins 36 of adjacent rows being offset relative to each other. This construction provides a large plurality of small flow paths extending axially through the converter core. At each offset, the flow encounters the leading edge of the next row of fins, thereby achieving intimate mass transfer between the incoming air flow stream and the catalyst coating 40. This efficient decomposition and removal of ozone from the flow stream is accomplished with relatively minimal pressure drop across the converter core. Thus, substantial air inflow rates can be maintained without exceeding ozone content or pressure drop limits.

FIGURE 5 illustrates one alternative preferred form of the invention, wherein the converter core is constructed from a single plate-fin element 132 having the offset rows 38 of coated fins 36, as previously described. FIGURE 5 illustrates the plate-fin element 132 wrapped upon itself in a spiral configuration to form the generally cylindrical converter core retained within the cylindrical segment 28 of the tubular converter housing 20.

The improved catalytic ozone converter 10 of the present invention thus provides a lightweight and compact device for reducing and/or removing ozone from an air flow stream for aircraft cabin pressurization and/or air-conditioning purposes. The converter 10 provides highly efficient ozone conversion in a device with minimal pressure drop and minimal weight.

A variety of modifications and improvements to the catalytic ozone converter 10 of the present invention will be apparent to those skilled in the art. Accordingly, no limitation on the invention is intended by way of the foregoing description and accompanying drawings, except as set forth in the appended claims.

## Claims

1. In combination with an aircraft environmental control system (12) for receiving an ozone-containing air flow stream used for environmental control of an aircraft cabin space (14), a catalytic ozone converter (10), comprising:
a housing (20) having open inlet and outlet ends (22, 24) to permit axial flow-through passage of the ozone-containing air flow stream; and
a converter core (30) mounted within said housing (20), characterized in that:
said housing has a diametrically expanding inflow segment (26) merging smoothly with a cylindrical segment (28) of circular cross-section which, in turn, merges smoothly with a tapered outflow segment of rapidly reducing diametric size,
said converter core (30) has a generally cylindrical shape and is mounted within said cylindrical segment (28) of the housing,
said converter core includes at least one plate-fin element (32), formed from a lightweight metal stamping and having a coating of an ozone decomposition catalyst thereon, said element (32) defining a plurality of fins arranged in an axial succession of rows (38) with the fins of each row being offset with respect to the fins of each adjacent row.

2. The catalytic ozone converter (10) of claim 1 wherein said at least one plate-fin element (32) comprises a plurality of plate-fin elements arranged in a packed configuration of substantially concentric rings.

3. The catalytic ozone converter (10) of claim 1 wherein said at least one plate-fin element (32) comprises a unitary plate-fin element (132) wrapped upon itself in a spiral configuration.

## Patentansprüche

1. Katalytischer Ozonumwandler (10) in Kombination mit einem Flugzeug-Klimasystem (12) zum Empfang eines ozonhaltigen Luftstroms, der zur Klimasteuerung eines Flugzeugkabinenraums (14) verwendet wird, mit:
einem Gehäuse (20) mit einem offenen Einlaß- und Auslaßende (22, 24), damit der ozonhaltige Luftstrom in Axialrichtung hindurchströmen kann; und
einem in dem Gehäuse (20) angebrachten Umwandlerkern (30), dadurch gekennzeichnet, daß
das Gehäuse ein Einströmsegment (26) mit sich erweiterndem Durchmesser aufweist, das stetig in ein zylindrisches Segment (28) kreisrunden Querschnitts übergeht, welches wiederum stetig in ein sich verjüngendes Ausströmsegment mit sich schnell verminderndem Durchmesser übergeht,
wobei der Umwandlerkern (30) eine allgemein zylindrische Form aufweist und in dem zylindrischen Segment (28) des Gehäuses angebracht ist,
wobei der Umwandlerkern mindestens ein beripptes Plattenelement (32) enthält, das durch Stanzen eines Leichtmetalls hergestellt ist und eine Beschichtung aus einem Ozonzersetzungskatalysator aufweist, wobei das Element (32) mehrere Rippen definiert, die in einer axialen Folge von Reihen (38) angeordnet sind, wobei die Rippen jeder Reihe zu den Rippen jeder benachbarten Reihe versetzt sind.

2. Katalytischer Ozonumwandler (10) nach Anspruch 1, bei dem das mindestens eine berippte Plattenelement (32) mehrere berippte Plattenelemente aufweist, die in einer dicht gepackten Konfiguration aus im wesentlichen konzentrischen Ringen angeordnet sind.

3. Katalytischer Ozonumwandler (10) nach Anspruch 1, bei dem das mindestens eine berippte Plattenelement (32) ein beripptes Plattenelement (132) als Einheit umfaßt, das in einer spiralförmigen Konfiguration um sich selber gewickelt ist.

## Revendications

1. Convertisseur catalytique d'ozone (10), associé à un système de contrôle environnemental (12) d'un avion, destiné à recevoir un flux d'air contenant de l'ozone utilisé pour le contrôle environnemental de l'espace (14) de la cabine d'un avion, comprenant :
un logement (20) ayant des extrémités d'entrée et de sortie ouvertes (22, 24) pour permettre le passage d'écoulement axial du flux d'air contenant de l'ozone ; et
un coeur (30) de convertisseur monté à l'intérieur dudit logement (20), caractérisé en ce que:
ledit logement comporte un segment d'entrée du flux (26) s'élargissant diamétralement, se fusionnant suivant un profil régulier avec un segment cylindrique (28) de section transversale circulaire, qui, à son tour, se fusionne suivant un profil régulier avec un segment conique de sortie du flux dont la dimension du diamètre diminue rapidement,
ledit coeur (30) de convertisseur a une forme généralement cylindrique et est monté à l'intérieur dudit segment cylindrique (28) du logement,
ledit coeur de convertisseur comporte au moins un élément (32) à ailettes en tôle, formé par estampage d'un métal léger et portant un revêtement d'un catalyste de décomposition de l'ozone, ledit élément (32) définissant une pluralité d'ailettes arrangées suivant une succession axiale de rangées (38), les ailettes de chaque rangée étant décalées par rapport aux ailettes de chaque rangée adjacente.

2. Convertisseur catalytique d'ozone (10) selon la revendication 1, dans lequel ledit au moins un élément (32) à ailettes en tôle est constitué d'une pluralité d'éléments à ailettes en tôle arrangés suivant une configuration serrée d'anneaux substantiellement concentriques.

3. Convertisseur catalytique d'ozone (10) selon la revendication 1, dans lequel ledit au moins un élément (32) à ailettes en tôle est constitué d'un élément unique à ailettes en tôle (132) enroulé sur lui-même suivant une configuration en spirale.
